# EUROPEAN PATENT APPLICATION

(11) **EP 2 613 554 A1**
(43) Date of publication of application: **10.07.2013**
(21) Application number: 12184513.5
(22) Date of filing: 14.09.2012
(51) Int. Cl.: H04N 21/431, H04N 21/482, H04N 5/445, H04N 21/41, G06F 3/0488

(54) **Electronic apparatus and program information display method**

(30) Priority: 06.01.2012 JP 2012001074
(71) Applicant: Kabushiki Kaisha Toshiba, Tokyo 105-8001 (JP)
(72) Inventor: Yamamoto, Sumihiko, Tokyo 105-8001 (JP); Esaka, Naoki, Tokyo 105-8001 (JP); Ozaki, Satoshi, Tokyo 105-8001 (JP)
(74) Representative: Henkel, Breuer & Partner

(57) **Abstract**

According to one embodiment, an electronic device (1) includes a touchpanel display (16) and a program information display module (110). The program information display module (110) is configured to display, while a first screen (200) is displayed, a second screen (201) when a first touch operation, a tap for example, is recognized. The first screen presents an electronic program guide. The second screen presents simplified information on a television broadcast program. The program information display module (110) is further configured to display, while the first screen is displayed, a third screen when a second touch operation, a long tap for example, is recognized. The third screen presents detailed information on the television broadcast program.

## Description

Embodiments described herein relate generally to the technique for displaying related information on television broadcast programs in cooperation with an electronic program guide (EPG).

In recent years, portable, battery-powered, and user-friendly electronic devices have been widely used. Electronic devices of this type have been getting more and more multifunctional and sophisticated. Most of them are provided with a communication function, such as wireless communication with another electronic device. Use of this function enables this type of electronic device to function as a remote controller for operating another electronic device, such as a television receiver or a video recorder.

A television receiver and a video recorder usually provide a graphical user interface (GUI) for searching for a television broadcast program. Typically, user support has been provided in such a manner that, for example, a broadcast schedule for television broadcast programs is displayed or related information on television broadcast programs is displayed.

To process these pieces of information, for example, various mechanisms for efficiently displaying related information on television broadcast programs have been proposed.

Here, for example, suppose a case where related information on television broadcast programs shown on a broadcast schedule is browsed on an electronic device that functions as a remote controller for operating a television receiver or a video receiver. In browsing the related information, suppose either simplified information browsing or detail information browsing can be selected. That is, suppose the amount of related information to be displayed can be switched.

In this case, if the user can switch between simplified information display and detail information display according to, for example, the degree of interest by an intuitive operation on television broadcast programs shown on a broadcast schedule (by an operation enabling the user to imagine simplicity or detail easily), this can improve the user friendliness of the electronic device.

A general architecture that implements the various feature of the embodiments will now be described with reference to the drawings. The drawings and the associated descriptions are provided to illustrate the embodiments and not to limit the scope of the invention.
FIG. 1 is an exemplary view showing an outer appearance of an electronic device of an embodiment.
FIG. 2 is an exemplary diagram showing a system configuration of the electronic device of the embodiment.
FIG. 3 is an exemplary diagram showing a usage pattern of the electronic device of the embodiment.
FIG. 4 is an exemplary view showing an EPG displayed on the electronic device of the embodiment.
FIG. 5 is an exemplary view showing an example of simplified information on television broadcast programs displayed on the electronic device of the embodiment.
FIG. 6 is an exemplary view showing an example of detail information on television broadcast programs displayed on the electronic device of the embodiment.
FIG. 7 is an exemplary view showing an example of the transition of a screen about an EPG on the electronic device of the embodiment.
FIG. 8 is an exemplary flowchart to explain the procedure for displaying related information on television broadcast programs on the electronic device of the embodiment.
FIG. 9 is an exemplary flowchart to explain the procedure for arranging operation buttons on a screen about an EPG on the electronic device of the embodiment.

Various embodiments will be described hereinafter with reference to the accompanying drawings.

In general, according to one embodiment, an electronic device includes a touchpanel display and a program information display module. The program information display module is configured to display, while a first screen is displayed on the touchpanel display, a second screen on the touchpanel display if a first touch operation is recognized in an area on the touchpanel display where an object representing a television broadcast program is displayed. The first screen presents an electronic program guide on which the object representing the television broadcast program is arranged. The second screen presents first information on a television broadcast program represented by the object. The program information display module is further configured to display, while the first screen is displayed on the touchpanel display, a third screen on the touchpanel display if a second touch operation is recognized in the area on the touchpanel display where the object is displayed. The third screen presents second information on the television broadcast program represented by the object.

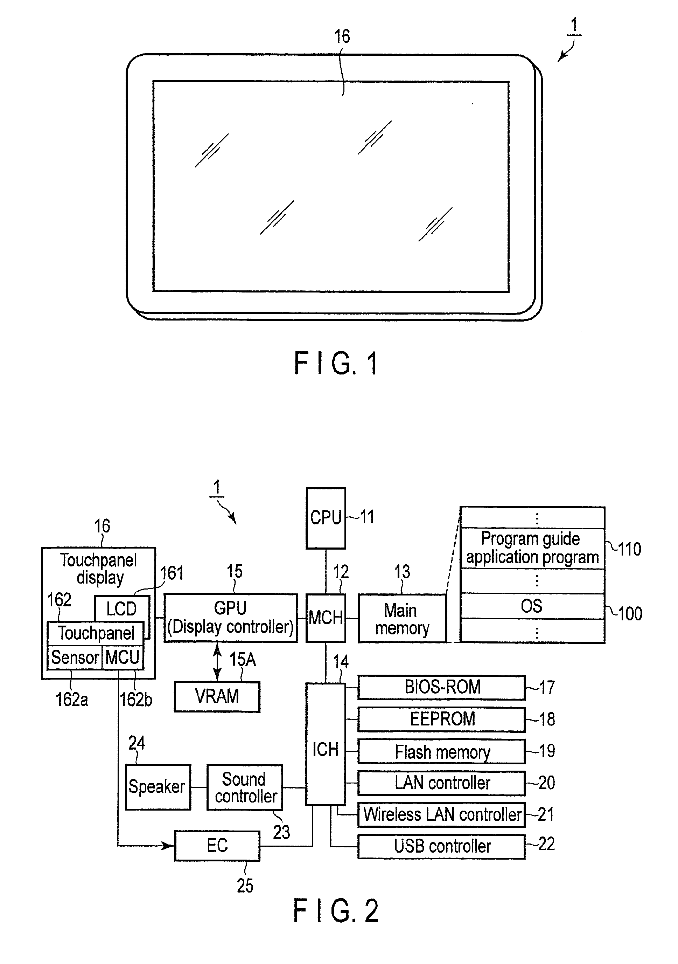

FIG. 1 is an exemplary view showing an outer appearance of an electronic device 1 according to an embodiment. As shown in FIG. 1, the electronic device is realized as, for example, a so-called tablet computer (which has a thin-board-like chassis with a touchpanel display 16 arranged in the central part of the front face of the chassis. The user performs a touch operation on the touchpanel display 16, thereby giving an operation instruction to the electronic device 1.

FIG. 2 is an exemplary diagram showing a system configuration of the electronic device 1.

As shown in FIG. 2, the electronic device 1 includes a central processing unit (CPU) 11, a memory controller hub (MCH) 12, a main memory 13, an I/O controller hub (ICH) 14, a graphics processing unit (GPU) (display controller) 15, and a video memory (VRAM) 15A. The electronic device 1 further includes a touchpanel display 16, a basic input/output system (BIOS)-read-only memory (ROM) 17, an electrically erasable programmable ROM (EEPROM) 18, a flash memory 19, and a local area network (LAN) controller 20. The electronic device 1 still further includes a wireless LAN controller 21, a Universal Serial Bus (USB) controller 22, a sound controller 23, a speaker 24, and an embedded controller (EC) 25.

The CPU 11, which is a processor that controls the operation of the electronic device 1, executes an operating system (OS) 100 and various application programs including a program guide application program 110, loaded from the flash memory 19 into the main memory 13. The program guide application program 110 is software for causing the electronic device 1 to operate as a remote controller for operating an audio-and-visual (AV) device, such as a television receiver or a video recorder. The CPU 11 also executes the BIOS stored in the BIOS-ROM 17. The BIOS is a program for controlling hardware.

The MCH 12 operates as a bridge that connects the CPU 11 and ICH 14 with each other, and as a memory controller that performs access control of the main memory 13. In addition, the MCH 12 includes the function of communicating with the GPU 15.

The GPU 15 is a display controller that, using a video memory 15A, displays images on a liquid-crystal display (LCD) 161 incorporated in the touchpanel display 16. In addition, the GPU 15 includes an accelerator that, in place of the CPU 11, draws images various programs are to display.

The ICH 14 operates as a memory controller that performs access control of the BIOS-ROM 17 and EEPROM 18. In addition, the ICH 14 incorporates an Integrated Device Electronics (IDE) controller for controlling the flash memory 19. Moreover, the ICH 14 includes the function of communicating with the LAN controller 20, wireless LAN controller 21, USB controller 22, sound controller 23, and EC 25.

The EEPROM 18 is a storage medium for storing, for example, identification information on the electronic device 1. The LAN controller 20 is a wire communication device that performs wire communication complying with, for example, the IEEE 802.3 standard. On the other hand, the wireless LAN controller 21 is a wireless communication device that performs wireless communication complying with, for example, the IEEE 802.11 standard. The USB controller 22 is a wire communication device that communicates with an externally connected USB in a way conforming to, for example, the USB 2.0 standard.

The sound controller 23, which is a sound source device, outputs audio data to be reproduced to the speaker 24.

The EC 25 is an embedded controller for managing the power of the electronic device 1. The EC 25 incorporates an input controller for controlling data input by a touch operation on the touchpanel display 16.

The touchpanel display 16 incorporates not only the LCD 16 but also a touchpanel 162. The touchpanel 162 laid on top of the LCD 161, which is a multitouch-compatible touchpanel, includes a sensor 162a and a microcontroller unit (MCU) 162b. When a touch operation has been performed at an n number of places on the touchpanel 162, all the n number of places are sensed by the sensor 162a. The MCU 162b outputs timing information indicating input timing to the touchpanel 162 and position information indicating the input positions on the touchpanel 162. The input information output by the MCU 162b is directed to the EC 25. The EC 25 stores the input information in its own register and then generates an interrupt, thereby giving notice to the CPU 11 to cause the CPU 11 to read the input information stored in the register. As a result, the generation of an event of the touch operation on the touchpanel 162 is notified to the OS 100. The OS 100 informs the program guide application program 110 of the generation of the event.

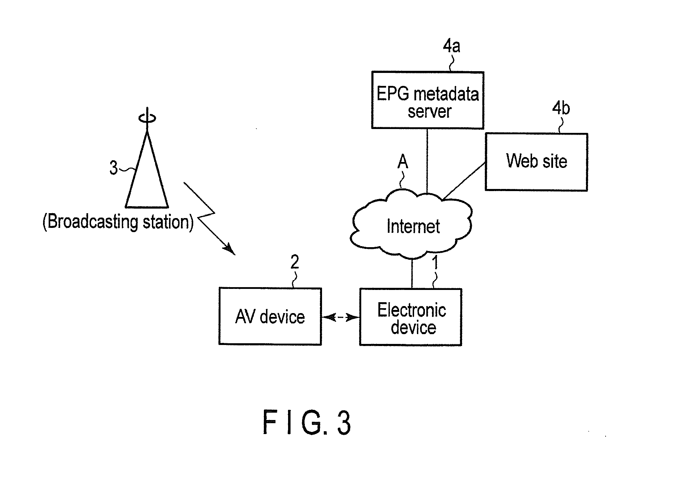

FIG. 3 is an exemplary diagram showing a usage pattern of the electronic device 1.

The electronic device 1 which includes the wireless LAN controller 21 and includes the program guide application program 119 installed in it is capable of operating as a remote controller for an AV device 2. The AV device 2, which is, for example, a television receiver or a video recorder, receives television broadcast program data broadcast from a broadcasting station 3.

The program guide application program 110 acquires EPG data for an EPG from an EPG metadata server 4a via the Internet A. The program guide application program 110 is a module that provides a user support so as to display a broadcast schedule for television broadcast programs or related information on television broadcast programs on the touchpanel display 16 using the EPG data. Hereinafter, of various pieces of information displayed on the basis of EPG data, a broadcast schedule for television broadcast programs may be particularly referred to as an EPG.

In addition, the program guide application program 110 can cause the electronic device 1 to receive, for example, television broadcast program data on the television broadcast program selected from the broadcast schedule of television broadcast programs displayed on the touchpanel display 16 and display the data on the touchpanel display 16. That is, the user can not only use the electronic device 1 as a remote controller for the AV device 2 but also watch a television broadcast program on the electronic device 1.

The EPG data includes metadata indicating the broadcast time and contents of a television broadcast program. As for the function of displaying related information on television broadcast programs, firstly, the program guide application program 110 includes the function of displaying information on television broadcast programs obtained from the metadata as simplified information on the touchpanel display 16. Secondly, the program guide application program 110 includes the function of creating a query to search for information on television broadcast programs from metadata, transmitting, via the Internet A, the query to a Web site 4b that provides information search service, and displaying the search result sent back from the Web site 4b as detail information on the touchpanel display 16. The program guide application program 110 is configured to enable the user to switch between simplified information display and detail information display according to, for example, the degree of interest, that is, switch the information amounts of related information on television broadcast programs to be displayed by an intuitive operation (on the touchpanel 162). Hereinafter, this will be explained in detail.

The program guide application program 110 can acquire detail information on television broadcast programs using a plurality of Web sites 4b. The program guide application program 110 creates a query according to the specification of each Web site 4b.

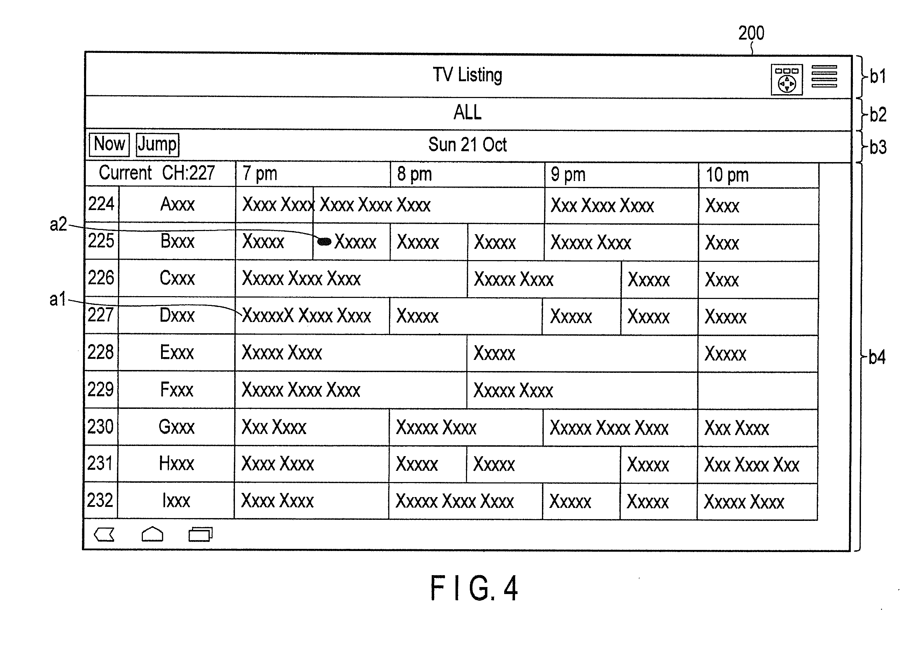

FIG. 4 is an exemplary view showing an EPG displayed on the electronic device 1. Here, a screen for presenting an EPG is referred to as an EPG screen 200 (a first screen).

As shown in FIG. 4, the program guide application program 110 displays an EPG in grid form on the EPG screen 200. On the EPG, a rectangular object (e.g., a1) representing a television broadcast program is referred to as a program cell.

As shown in FIG. 4, the EPG screen 200 is divided into four areas: a screen switching area b1, an attribute switching area b2, a date switching area b3, and a program guide area b4. The screen switching area b1 is an area provided for performing a touch operation to specify the switching of screens. To switch screens, the screen switching area b1 is flicked horizontally. Therefore, the EPG screen 200 can be displayed by flicking the screen switching area b1 on another screen to move to the EPG screen 200. Obviously, flicking the screen switching area b1 on the EPG screen 200 enables the user to move to the preceding screen or to another screen.

The attribute switching area b2 is an area provided for performing a touch operation to specify the filtering of program cells displayed in the program guide area b4. Since "ALL" has been selected in FIG. 4, all the programs cells are displayed. For example, when the attribute switching area b2 has been flicked horizontally to select "Sport," program cells to be displayed in the program guide area b4 can be narrowed down to only program cells of television broadcast programs whose attributes shown in metadata are "sports." This narrowing down may be performed by displaying only program cells of television broadcast programs that have the selected attribute, or by differentiating those program cells from the other ones by color. Also, the narrowing down may be performed by using attributes of television broadcast programs, which are indicated by metadata.

The date switching area b3 is an area provided for performing a touch operation to specify the shift of a time range of a television broadcast program to be displayed in the program guide area b4 backward or forward in days. For example, when EPG data includes metadata on two weeks of television broadcast programs, flicking the date switching area b3 horizontally enables the displayed contents of the program guide area b4 to be scrolled in a time range of two weeks from today.

The program guide area b4 is a main area of the EPG screen 200 that presents an EPG. Flicking the program guide area b4 vertically enables the area b4 to be scrolled to switch channels to be displayed. Flicking the program guide area b4 horizontally enables the area b4 to be scrolled to shift a time range of a television broadcast program to be displayed (in the range of the date selectable in the date switching area b3) backward or forward. In addition, flicking the program guide area b4 obliquely enables the area b4 to be scrolled to move a channel to be displayed and a time range simultaneously. Moreover, performing a click operation on a program cell displayed in the program guide area b4 enables the user to browse related information on the television broadcast program shown in the program cell. An object with reference symbol a2 put on a program cell indicates that the television broadcast program shown in the program cell is to be subjected to programmed recording or programmed watching. For example, programmed recording and programmed watching are differentiated by color.

Here, suppose the user who has browsed the EPG screen 200 shown in FIG. 4 feels interest in a television broadcast program shown in program cell a1 and is thinking of browsing related information on the television broadcast program.

As described above, the program guide application program 110 includes two related information display functions: (1) the function of displaying information acquired from metadata as simplified information, and (2) the function of creating a query from metadata and displaying the search result at Web site 4b as detail information. When browsing simplified information, the user performs a touch operation (tap operation) whose period of contact with the touchpanel display 16 is within a period determined to be a threshold value in the area where program cell a1 is displayed. When browsing detail information, the user performs a touch operation (a long tap operation) whose period of contact with the touchpanel display 16 exceeds the period determined to be the threshold value in the area.

That is, the electronic device 1 realizes the switching of the amounts of related information displayed about a television broadcast program shown in a program cell by an intuitive operation that makes it easy to imagine simplicity and detail in such a manner that a short touch causes only basic information to be displayed and a long touch causes detail information to be displayed by linking a contact period to the amount of information.

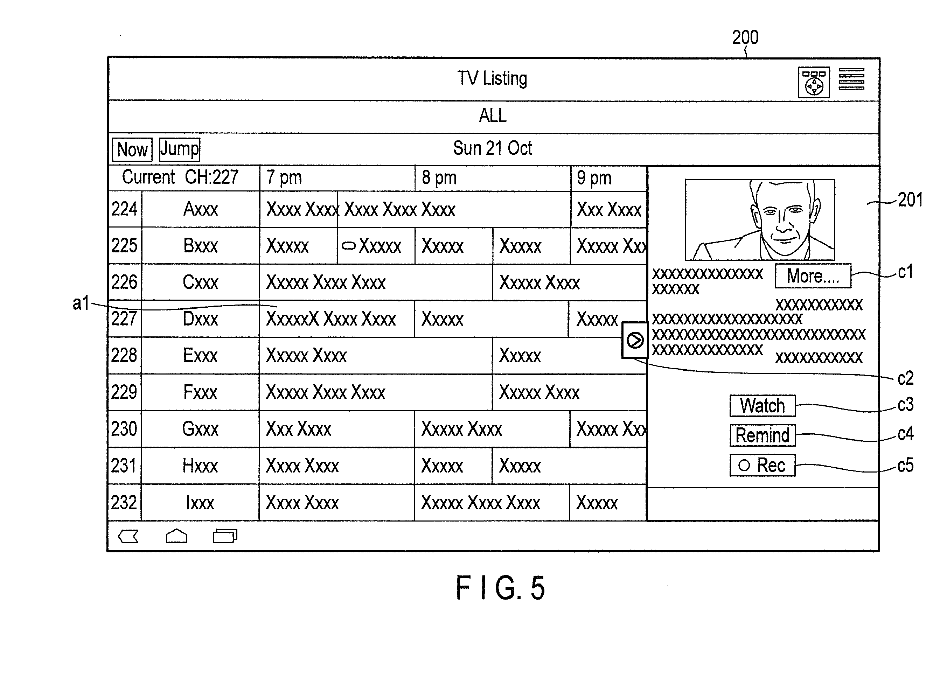

FIG. 5 is an exemplary view showing an example of simplified information on television broadcast programs displayed on the electronic device 1. Here, a screen for presenting simplified information on a television broadcast program is referred to as a simplified program screen 201 (a second screen).

When program cell a1 has been tapped, the program guide application program 110 displays the simplified program screen 201 so that the simplified screen 201 may be laid on a part of the EPG screen 200 as shown in FIG. 5. On the simplified program screen 201, information obtained from metadata on the television broadcast program shown in program cell a1 included in EPG data is displayed as simplified information. While the simplified program screen 201 has been laid on a part of the EPG screen 200, the simplified screen may be displayed in place of the EPG screen 200.

In addition, the program guide application program 110 arranges two operation buttons c1, c2 for screen transition on the simplified program screen 201. Operation button c1 is a button for specifying the display of detail information when the user wants to browse detail information. Therefore, the user can browse detail information on the television broadcast program shown in program cell a1 in the following two procedures: (1) perform a long tap operation on program cell a1 on the EPG screen 200; and (2) perform a tap operation on program cell a1 on the EPG screen 200 (to display the simplified program screen 201), and then perform a touch operation on operation button c1 on the simplified program screen 201. Operation button c2 is a button for specifying the erasure of the simplified program screen 201 from the EPG screen 200. That is, when operation button c2 is operated, the EPG screen 200 in the state shown in FIG. 4 is restored.

Moreover, the program guide application program 110 further arranges three operation buttons c3, c4, c5 on the simplified program screen 201. Operation button c3 ("Watch" button) is a button for watching the television broadcast program shown in program cell a1. When operation button c3 is operated, the program guide application program 110 instructs the AV device 2 to display a television broadcast program currently on air on the same channel as that of the television broadcast program shown in program a1. If the television broadcast program shown in program cell a1 is a program currently on air, the television broadcast program is displayed. If the television broadcast program shown in program cell a1 is a program scheduled to be broadcast, a television broadcast program currently on air on the same channel as that of the television broadcast program is displayed.

Operation button c4 ("Remind" button) is a button for programming the watching of the television broadcast program shown in program cell a1. When operation button c4 is operated, the program guide application program 110 instructs the AV device 2 to program the watching of the television broadcast program shown in program cell a1. If the television broadcast program is a program currently on air, the television broadcast program is displayed immediately. If the television broadcast program is a program scheduled to be broadcast, the television broadcast program will be displayed when broadcast time shown in metadata on the television broadcast program has been reached. When the broadcast time shown in metadata on the television broadcast program has been reached, the program guide application program 110 displays the arrival of the broadcast time on the touchpanel display 16, thereby informing the user of the arrival.

Operation button c5 ("Rec" button) is a button for programming the recording of the television broadcast program shown in program cell a1. Operation button c5 is enabled when the AV device 2 is provided with a recording function. When operation button c5 is operated, the program guide application program 110 instructs the AV device 2 to program the recording of the television broadcast program shown in program cell a1.

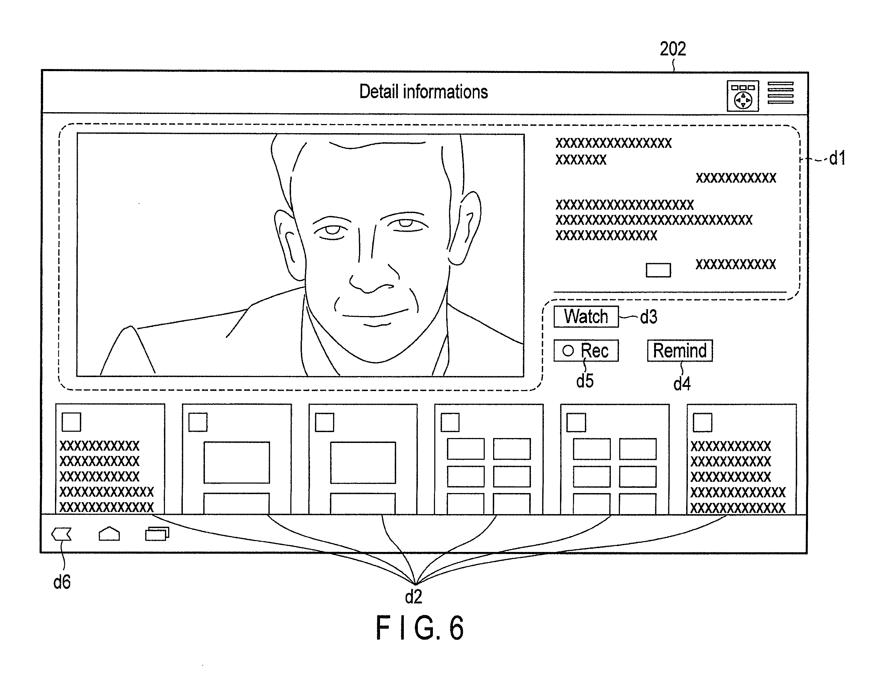

FIG. 6 is an exemplary view showing an example of detail information on television broadcast programs displayed on the electronic device 1. Here, a screen for presenting detail information on television broadcast programs is referred to as a detailed program screen 202 (a third screen).

When a long tap operation is performed on program cell a1 on the EPG screen 200, the program guide application program 110 displays the detailed program screen 202 in place of the EPG screen 200. On the detailed program screen 202, there is provided information obtained from metadata on the television broadcast program shown in program cell a1 included in EPG data, that is, a simplified information area d1 for displaying information equivalent to what is presented on the simplified program screen 201.

In addition to the simplified information area d1, a plurality of mini-socket areas d2 are provided on the detailed program screen 202. The mini-socket areas d2 are areas where the result of a reply from Web site 4b to the aforementioned query (created from metadata on the television broadcast program shown in program cell a1 included in EPG data), that is, detail information on the television broadcast program, is displayed. The mini-socket areas d2 may be provided for each Web site 4b. For example, they may be provided for each query on the assumption that a plurality of queries are created and transmitted to a Web site 4b. The mini-socket areas d2 can be expanded vertically in display size (so as to overlap with simplified information area d1).

Of (1) the mini-sockets of the simplified program screen and (2) metadata, mini-sockets for more detail information (e.g., cast or series) not displayed on the simplified program screen are present in addition to the reply from Web site 4b. An area including the upper half (d1, d3, d4, d5) of FIG. 6 is a preview screen of mini-sockets. When a mini-socket is selected, program information, images, or a Web page can be seen in the upper-half large area according to the contents.

On the detailed program screen 202, too, operation buttons d3, d4, d5 corresponding to operation buttons c3, c4, c5 of the simplified program screen 201 are arranged. Therefore, the watching, programmed watching, recording, and programmed recording of the television broadcast program shown in program cell a1 can be performed.

In addition, at the lower left of the detailed program screen 202, operation button d6 for returning to the preceding screen is arranged. Operation button d6 is a common button arranged on all the screens by the OS 100. When operation button d6 is operated while the detailed program screen 202 is being displayed, the EPG screen 200 in the state shown in FIG. 4 is restored. Even when the detailed program screen 202 has been displayed as a result of operation button c1 on the simplified program screen 201 (displayed so as to be laid on a part of the EPG screen 200) of FIG. 5 having been operated, the program guide application program 110 restores the EPG screen 200 in the state of FIG. 4 with the simplified program screen 201 erased from the EPG screen 200 at the time of the operation of operation button d6.

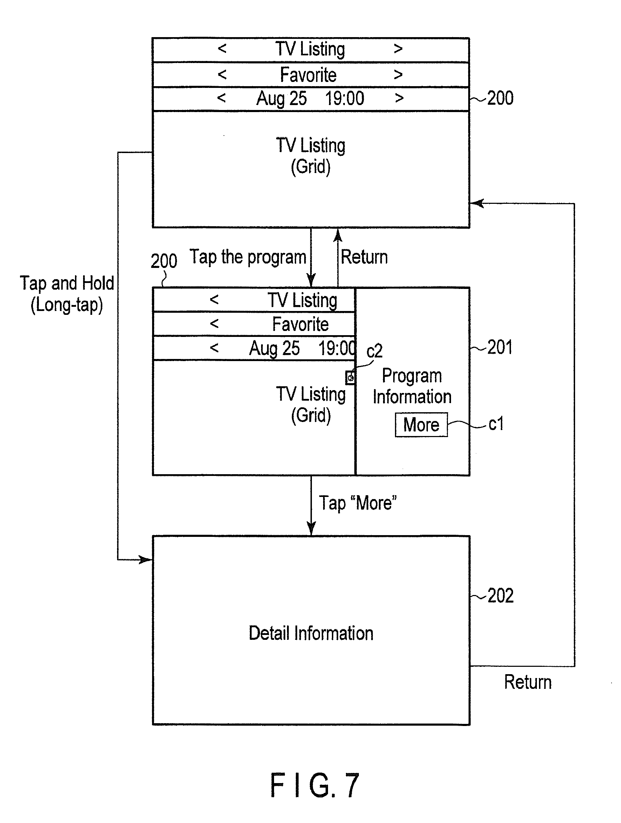

Therefore, the program guide application program 110 controls screen transition between the EPG screen 200, simplified program screen 201, and detailed program screen 202 as shown in FIG. 7. Specifically, when a tap operation is performed on the EPG screen 200, the simplified program screen 201 is displayed so as to be laid on a part of the EPG screen 200. When a long tap operation is performed on the EPG screen 200, the detailed program screen 202 is displayed in place of the EPG screen 200 (skipping the display of the simplified program screen 201).

Control can return from the simplified program screen 201 to the EPG screen 200 (by erasing the simplified program screen 201 from the EPG screen 200) or proceed to the detailed program screen 202. Control can return from the detailed program screen 202 to the EPG screen 200. In addition, on either the simplified program screen 201 or detailed program screen 202, the watching, programmed watching, recording, and programmed recording of a television broadcast program can be performed.

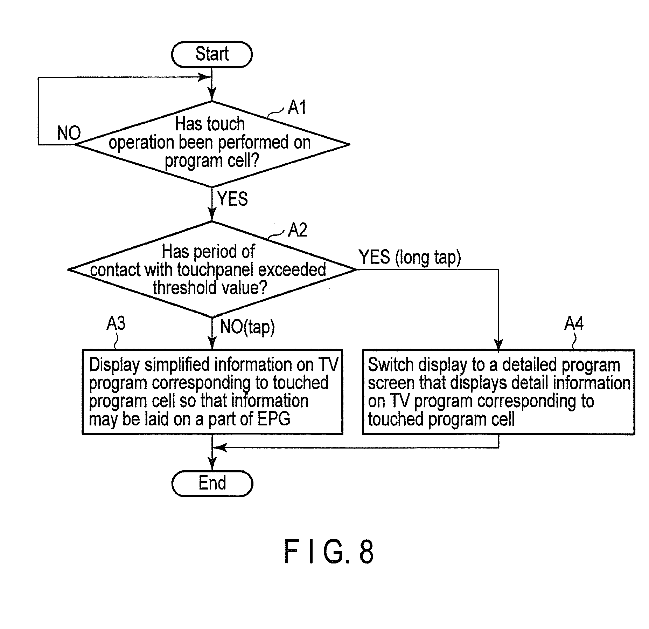

FIG. 8 is an exemplary flowchart to explain the procedure for displaying related information on television broadcast programs on the electronic device 1.

When a touch operation has been performed on a program cell on the EPG screen 200 (YES in block A1), the program guide application program 110 determines whether the period of contact with the touchpanel display has exceeded a threshold value (block A2).

If the contact period is within the threshold value (NO in block A2), that is, a tap operation has been performed, the program guide application program 110 displays simplified information on a television broadcast program corresponding to the touched program cell so that the simplified information may be laid on a part of the EPG (block A3).

If the contact period has exceeded the threshold value (YES in block A2), that is, a long tap operation has been performed, the program guide application program 110 switches the display to a detailed program screen that displays detail information on a television broadcast program corresponding to the touched program cell (block A4).

As described above, the electronic device realizes the switching of the amounts of related information displayed about a television broadcast program by an intuitive operation performed in such a manner that tapping a program cell on the EPG enables simplified information on a television broadcast program corresponding to the program cell to be browsed and tapping a program cell for a longer time enables detail information to be browsed.

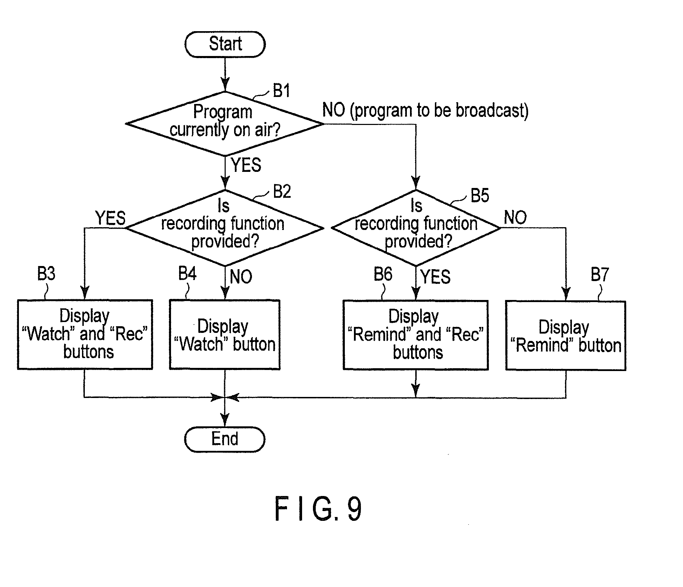

In the above explanation, as shown in FIG. 5 and FIG. 6, "Watch" button (c3, d3), "Remind" button (c4, d4), and "Rec" button (c5, d5) have been arranged fixedly on both the simplified program screen 201 and detailed program screen 202. As for the three operation buttons, necessary ones can be arranged dynamically according to the situation. For example, when a television broadcast program corresponding to a program cell tapped or tapped for a longer time is a program currently on air, the role of "Remind" button (c4, d4) becomes virtually identical to the role of "Watch" button (c3, d3) and therefore its display can be omitted. FIG. 9 is an exemplary flowchart to explain the procedure for arranging operation buttons on the simplified program screen 201 and detailed program screen 202.

When the simplified program screen 201 or detailed program screen 202 is displayed as a result of a program cell having being tapped or tapped for a longer time on the EPG screen 200, the program guide application program 110 checks whether a television broadcast program corresponding to the program tapped or tapped for a longer time is a program currently on air (block B1). Whether the program is on air or not can be checked by comparing, for example, the broadcast time shown in metadata with the system time of the electronic device 1. If the program is currently on air (YES in block B1), the program guide application program 110 then checks whether the AV device 2 is provided with a recording function (block B2). If the AV device 2 is provided with a recording function (YES in block B2), the program guide application program 110 displays "Watch" button and "Rec" button (block B3). If the AV device 2 is not provided with a recording function (NO in block B2), the program guide application program 110 displays only "Watch" button (block B4). Whether the AV device 2 is provided with a recording function can be checked by making inquiries by, for example, wireless communication.

If a television broadcast program corresponding to the program cell is a program scheduled to be broadcast (NO in block B1), the program guide application program 110 then checks whether the AV device 2 is provided with a recording function (block B5). If the AV device 2 is provided with a recording function (YES in block B5), the program guide application program 110 displays "Remind" button and "Rec" button (block B6). If the AV device is not provided with a recording function (NO in block B5), the program guide application program 110 displays only "Remind" button (block B7).

This procedure enables three operation buttons, "Watch" button, "Remind" button, and "Rec" button, to be arranged dynamically according to the situation.

While the method of displaying program information has been explained on the assumption that the electronic device 1 operates as a remote controller for the AV device 2, the method is not limited to this and, of course, may be applied to a case where the electronic device 1 is provided with a TV function.

Since the operation control process of each embodiment can be realized by software (programs), the software is installed in an ordinary computer via a computer-readable storage medium that has stored the software and run on the computer, thereby enabling the same effect as that of each embodiment to be realized easily.

## Claims

1. An electronic device (1) **characterized by** comprising:
a touchpanel display (16); and
a program information display module (110) configured to:
display, while a first screen is displayed on the touchpanel display, a second screen on the touchpanel display if a first touch operation is recognized in an area on the touchpanel display where an object representing a television broadcast program is displayed, wherein the first screen presents an electronic program guide on which the object representing the television broadcast program is arranged, and wherein the second screen presents first information on a television broadcast program represented by the object; and
display, while the first screen is displayed on the touchpanel display, a third screen on the touchpanel display if a second touch operation is recognized in the area on the touchpanel display where the object is displayed, wherein the third screen presents second information on the television broadcast program represented by the object.

2. The device (1) of Claim 1, **characterized in that** the program information display module (110) is configured to determine the first touch operation by a touch operation whose period of contact with the touchpanel display is not longer than a threshold value, and to determine the second touch operation by a touch operation whose period of contact with the touchpanel display exceeds the threshold value.

3. The device (1) of Claim 2, **characterized in that:**
the first information comprises simplified information on the television broadcast program acquired from metadata on the television broadcast program included in the electronic program guide; and
the second information comprises detail information on the television broadcast program acquired from a server connected via a network.

4. The device (1) of Claim 3, **characterized by** further comprising a communication module (20, 21),
wherein the program information display module (110) is configured to acquire the detail information on the television broadcast program by creating a query using the metadata and transmitting the query to the server via the communication module.

5. The device (1) of Claim 1, **characterized in that** the program information display module (110) is configured to display the second screen on the touchpanel display in such a manner that the second screen is laid on a part of the first screen, and to display the third screen on the touchpanel display in place of the first screen.

6. The device (1) of Claim 5, **characterized in that** the program information display module (110) is configured to display the third screen on the touchpanel display in place of the first screen on which the second screen has been laid when a touch operation is recognized on an object representing an operation button for browsing the second information arranged on the second screen on the touchpanel display.

7. The device (1) of Claim 1, **characterized in that:**
the first touch operation comprises a tap operation, and
the second touch operation comprises a long tap operation.

8. The device (1) of Claim 1, **characterized in that** the program information display module (110) is configured to arrange, on either the second screen or the third screen, at least one of an object representing an operation button for watching the television broadcast program represented by the object on which the first touch operation or the second touch operation is recognized and an object representing an operation button for programming the watching of the television broadcast program.

9. The device (1) of Claim 8, **characterized in that** the program information display module (110) is configured to arrange, on either the second screen or the third screen, an object representing an operation button for watching the television broadcast program when the television broadcast program is a program currently on air, and to arrange, on either the second screen or the third screen, an object representing an operation button for programming the watching of the television broadcast program when the television broadcast program is a program scheduled to be broadcast.

10. The device (1) of Claim 1, **characterized in that** the program information display module (110) is configured to arrange, on either the second screen or the third screen, an object representing an operation button for recording the television broadcast program represented by the object on which the first touch operation or the second touch operation is recognized.

11. The device (1) of Claim 10, **characterized in that** the program information display module (110) is configured to arrange, on either the second screen or the third screen, an object representing an operation button for recording the television broadcast program when a recording function is provided.

12. A program information display method for an electronic device (1) with a touchpanel display, the method **characterized by** comprising:
displaying (A3), while a first screen is displayed on the touchpanel display, a second screen on the touchpanel display if a first touch operation is recognized on the touchpanel display in an area where an object representing a television broadcast program is displayed, wherein the first screen presents an electronic program guide on which the object representing the television broadcast program is arranged, and wherein the second screen presents first information on a television broadcast program represented by the object; and
displaying (A4), while the first screen is displayed on the touchpanel display on the touchpanel display, a third screen on the touchpanel display if a second touch operation is recognized in the area on the touchpanel display where the object is displayed, wherein the third screen presents second information on the television broadcast program represented by the object.

13. The method of Claim 12, **characterized by** further comprising:
determining (NO in A2) the first touch operation by a touch operation whose period of contact with the touchpanel display is not longer than a threshold value; and
determining (YES in A2) the second touch operation by a touch operation whose period of contact with the touchpanel display exceeds the threshold value.

14. The method of Claim 13, **characterized by** further comprising:
displaying, as the first information, simplified information on the television broadcast program acquired from metadata on the television broadcast program included in the electronic program guide; and
displaying, as the second information, detail information on the television broadcast program acquired from a server connected via a network.

15. The method of Claim 14, **characterized by** further comprising acquiring detail information on the television broadcast program by transmitting a query created using the metadata to the server.

16. A computer-readable, non-transitory storage medium having stored thereon a computer program which is executable by a computer with a touchpanel display, the computer program controlling the computer to execute functions of:
displaying (A3), while a first screen is displayed on the touchpanel display, a second screen on the touchpanel display if a first touch operation is recognized in an area on the touchpanel display where an object representing a television broadcast program is displayed, **characterized in that** the first screen presents an electronic program guide on which the object representing the television broadcast program is arranged, and wherein the second screen presents first information on a television broadcast program represented by the object; and
displaying (A4), while the first screen is displayed on the touchpanel display, a third screen on the touchpanel display if a second touch operation is recognized in the area on the touchpanel display where the object is displayed, wherein the third screen presents second information on the television broadcast program represented by the object.

17. The storage medium of Claim 16, **characterized in that** the computer program further controlling the computer to execute functions of:
determining (NO in A2) the first touch operation by a touch operation whose period of contact with the touchpanel display is not longer than a threshold value; and
determining (YES in A2) the second touch operation by a touch operation whose period of contact with the touchpanel display exceeds the threshold value.

18. The storage medium of Claim 17, **characterized in that** the computer program further controlling the computer to execute functions of:
displaying, as the first information, simplified information on the television broadcast program acquired from metadata on the television broadcast program included in the electronic program guide; and
displaying, as the second information, detail information on the television broadcast program acquired from a server connected via a network.

19. The storage medium of Claim 18, **characterized in that** the computer program further controlling the computer to execute function of acquiring detail information on the television broadcast program by transmitting a query created using the metadata to the server.
